(19)

Europäisches Patentamt
European Patent Office
Office européen des brevets

(11)     **EP 2 647 252 B1**

(12)                     **EUROPEAN PATENT SPECIFICATION**

(45) Date of publication and mention
of the grant of the patent:
**17.12.2014  Bulletin 2014/51**

(51) Int Cl.:
***H04W 64/00*** (2009.01)

(21) Application number: **11748577.1**

(86) International application number:
**PCT/EP2011/004042**

(22) Date of filing: **11.08.2011**

(87) International publication number:
**WO 2012/072153 (07.06.2012 Gazette 2012/23)**

(54) **A METHOD FOR RESIDENTIAL LOCALIZATION OF MOBILE PHONE USERS**

VERFAHREN FÜR WOHNORTLOKALISIERUNG VON MOBILTELEFONBENUTZERN

PROCÉDÉ DE LOCALISATION RÉSIDENTIELLE D'UTILISATEURS DE TÉLÉPHONE MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2010  ES 201331767**

(43) Date of publication of application:
**09.10.2013  Bulletin 2013/41**

(73) Proprietor: **Telefónica, S.A.
28013 Madrid (ES)**

(72) Inventors:
• **FRIAS MARTINEZ, Vanessa
E-28013 Madrid (ES)**
• **FRIAS MARTINEZ, Enrique
E-28013 Madrid (ES)**

(74) Representative: **Carlos Hernando, Borja
Garrigues IP, S.L.P.
Hermosilla, 3
28001 Madrid (ES)**

(56) References cited:
**EP-A1- 1 047 275        GB-A- 2 402 841
US-A1- 2008 207 222    US-A1- 2009 125 321
US-A1- 2009 157 496**

• **MARTA C. GONZÁLEZ ET AL: "Understanding
individual human mobility patterns", NATURE,
vol. 453, no. 7196, 5 June 2008 (2008-06-05), pages
779-782, XP55011504, ISSN: 0028-0836, DOI:
10.1038/nature06958 cited in the application**
• **MICHAEL IAN SHAMOS ET AL: "Closest-point
problems", FOUNDATIONS OF COMPUTER
SCIENCE, 1975., 16TH ANNUAL SYMPOSIUM ON,
IEEE, PISCATAWAY, NJ, USA, 13 October 1975
(1975-10-13), pages 151-162, XP031287730, cited
in the application**
• **S C KRYGSMAN ET AL: "The use of cellphone
technology in activity and travel data collection",
24TH ANNUAL SOUTHERN AFRICAN
TRANSPORT CONFERENCE 2005, 11 July 2005
(2005-07-11), pages 696-705, XP55011514,
Pretoria, South Africa ISBN: 978-1-92-001712-5
cited in the application**
• **BAYIR M A ET AL: "Discovering spatiotemporal
mobility profiles of cellphone users", WORLD OF
WIRELESS, MOBILE AND MULTIMEDIA
NETWORKS&WORKSHOPS, 2009. WOWMOM
2009. IEEE INTERNATIONAL SYMPOSIUM ON A,
IEEE, PISCATAWAY, NJ, USA, 15 June 2009
(2009-06-15), pages 1-9, XP031543673, ISBN:
978-1-4244-4440-3 cited in the application**

**Description**

Field of the art

The present invention generally relates to a method for residential localization of mobile phone users, and more particularly to a method comprising analysing mobile phone-call data of users whose residential locations are known a priori, and applying the knowledge obtained therefrom to automatically determine the residential location of users whose residential location is unknown.

Prior State of the Art

The home location is of critical importance to the marketing departments of mobile phone carriers since it is used to offer personalized adds to a person, e.g. advertisements, which while at home might be personalized differently than sending advertising while on her way to work. Marketing departments from telecommunication companies want to gain a deep understanding of their clients in order to personalize services according to their residential location, their socio-economic level, their gender or their age.

However, the residential location information is only available for users that have a contract with the carrier, which in some cases can be as small as just a 5% of the total customer base. Thus, a method is needed to obtain the residential location of the customers for whom this piece of information is not available.

Cellular phone traces have been extensively used to model and understand the mobility patterns of users [1, 2, 3]. Recent work by Gonzalez et al [3] tracked the trajectory followed by 100,000 users over a period of 6 months. The results showed a high degree of temporal and spatial correlation that could be help towards trajectory prediction. Similar work was carried out by Bayir et al. [1] using over 350K hours of cellular phone log data to model typical cellular phone user trajectories. For the experiment, the users gave out specific information related to their home and work locations. The authors found that users spend, on average, over a 67% of their time between home and work, and showed that frequent patterns will highly predictable.

Although a lot of work has been carried out to understand mobility patterns and its predictability, to the best of the present inventors' knowledge, there are no previous documented efforts to automatically identify the residential location of an individual based on its cellular phone behavioural fingerprint.

Although there are no algorithms to automatically identify the residential location of an individual based on its cellular phone use traces, the problem has been tackled so far by telecommunications companies by manually pre-defining a set of rules according to the typical local social behaviour, i.e. home is defined as the location from which users make cellular phone calls after a certain time at night during certain weekdays. However, these manual solutions are ad-hoc and need to be modified on a case by case basis, which makes it tedious and non-scientific, and specially unpractical for companies like Telefónica with customers across various countries and continents, and therefore with different time zones.

Description of the Invention

It is necessary to offer an alternative to the state of the art which covers the gaps found therein, particularly related to the lack of methods for automatically identifying the residential location of mobile phone users.

To that end, the present invention provides a method for residential localization of mobile phone users, comprising defining the residential location of one or more users according to their mobile phone activity during a time pattern comprising at least one specific period of time.

In a characteristic manner, the method of the invention comprises carrying out said residential localization by automatically carrying out the next steps:

a) determining said time pattern, or residential calling pattern, from mobile phone-call data of a plurality of users whose residential locations are known a priori, such as subscribers/users with a contract, and

b) applying said determined residential calling pattern to mobile phone-call data of each of said one or more users whose residential location is unknown, such as anonymized users or pre-paid customers, in order to determine its residential location as that at which at least one call has been made with his mobile phone within said at least one specific period included in said residential calling pattern.

For a preferred embodiment, the method comprises obtaining said mobile phone-call data of said step a) and/or of said step b) from call detail records (CDRs) of the mobile phones of said users.

Said residential calling pattern generally includes a combination of days of the week and times of the day at which calls are made by users at their respective residential locations.

The method comprises, according to an embodiment, carrying out said step a) by at least a first sub-step a1) of associating, for each of said plurality of users, a known geographical area identification, such as a zip code, representative of said a priori known residential location, to at least one cellular tower covering said geographical area, in order to define the residential location of said plurality of users by the cellular towers providing coverage to their mobile phones when at their residential locations, as, given that the cellular phone calls are geo-localized by cellular tower, the residential location for said users needs also to be specified in that format.

Hence, this first sub-step a1) will output a label for each client with a contract whereby the label characterizes the residential location of the user in terms of cellular tower instead of zip code.

Advantageously, after said first sub-step a1), the method comprises carrying out a second sub-step a2) comprising determining the behavioural fingerprint of each of said plurality of users from their cellular phone usage and assigning, from the determined behavioural fingerprint, a cellular tower that represents her/his residential location.

In order to find an optimal residential calling pattern that maximizes the percentage of users for whom the cellular tower assigned as residential location is correct, said second sub-step a2) further comprises applying an optimization technique to the data of a training set including data referring to each of said plurality of users with known locations, regarding at least its identification, its mobile phone calls and the cellular tower assigned there to.

Said sub-step a2) tries to find the best combination of days of the week and times of the day that characterizes the calling pattern from residential locations for said training set.

For an embodiment, the method comprises using one or more genetic algorithms [4] as said optimization technique.

The residential calling pattern thus obtained as the solution of the processing of the calls dataset as per said sub-steps a1) and a2), is then used to systematically identify the residential location of all the other pre-paid customers lacking any information about their approximate residential location, i.e. to perform said step b).

According to an embodiment, said step b) comprises determining the residential location of each of said one or more users of unknown locations by applying said optimal residential calling pattern to its mobile phone-call data and obtaining the cellular tower or cellular towers indicated by said data as having been used to make said at least one call.

The present invention thus provides a new method for automatically identifying the residential location of a cellular phone subscriber solely based, preferably, on its collection of CDRs. This approach eliminates the manual solutions that have been used so far by telecommunication companies and allows for an automatic computation without human intervention.

Brief Description of the Drawings

The previous and other advantages and features will be more fully understood from the following detailed description of embodiments, with reference to the attached drawings, which must be considered in an illustrative and non-limiting manner, in which:

Figure 1 is a flow diagram showing the steps carried out to perform sub-step a1) of the method of the invention, for associating zip codes to cellular towers;

Figure 2 shows different diagrams used for an embodiment of sub-step a1) of the method of the invention, by the next three views: (a) Zip code areas diagram for an urban city; (b) Voronoi diagrams showing coverage areas for the same urban city and (c) Overlapping zip code map with Voronoi diagrams;

Figure 3 shows a numerical mapping between zip codes and Voronoi diagrams, particularly: (a) Numerical representation of the zip code map shown in Figure 2a, (b) Numerical representation of the areas covered by the Voronoi diagrams shown in Figure 2b and (c) Output of a scan line algorithm applied to said numerical representations for the zip code 0001 as shown in Figure 2;

Figure 4 shows, by means of a flux diagram, a scanline algorithm used to compute the intersections between each Voronoi polygon and each zip code area, according to sub-step a1);

Figure 5 is a flow diagram which shows the general steps of an embodiment of step a) of the method of the invention, carried out to perform the identification of the residential calling pattern from the CDRs of the training set of users whose locations are known a priori, or users with a contract;

Figure 6 shows the structure of a Call Detail Record (CDR) for those users with a contract which locations are known a prior, said CDR therefore including the ZipCode of the corresponding user with a contract;

Figure 7 shows the structure of a chromosome of the genetic algorithm used for the optimization of sub-step a2) of the method of the invention, for an embodiment;

Figure 8 show different waves representing the calibration of the fitness function used for evaluating chromosomes of the genetic algorithm, for different accuracy and coverage weighted values; and

Figure 9 is a flow diagram which describes in detail the evaluation of chromosomes of box 2 of Figure 5, particularly carried out by the fitness function whose calibration process is represented by Figure 8.

Detailed Description of Several Embodiments

As stated above, the step a ) of the method of the invention consists of two main parts: (i) compute the correspondence between the residential location zip codes and the cellular towers, i.e. the above sub-step a1), and (ii) solve the optimization problem for identifying the residential calling pattern using Genetic Algorithms (GA), i.e. the above sub-step a2). Next said main parts of step a) are described in detail for an embodiment, with reference to the enclosed Figures.

I. Mapping between Zip Codes and Cellular Towers

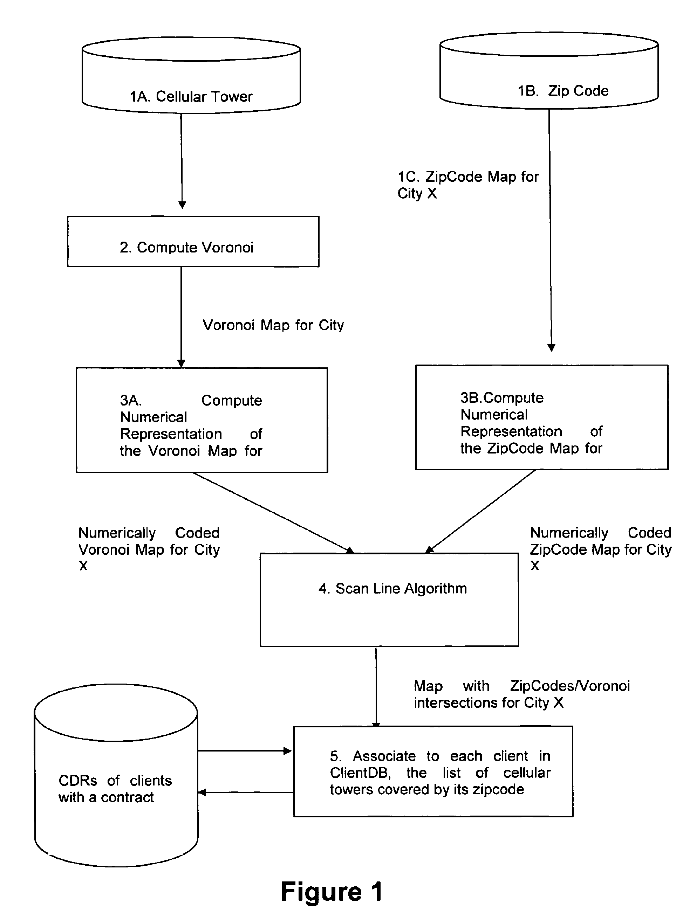

As discussed previously, the residential location of cellular phone users with a contract is known a priori. Specifically, the residential location is provided as a zip code. Since those calls made or received by the users are placed on cellular towers, the network only allows identifying as residential location a cellular tower (or a set of cellular towers). Thus, there is first needed to map the geographical correspondence between zip codes and cellular towers. With the transformation at hand, it is possible to assign a specific set of BTSs (Base Transceiver Stations) or cellular towers, to the zip code where the individual claims to live. The coverage of the cellular towers within a geographical area is approximated by the Voronoi Diagram (map of Voronoi polygons) of that area [5].
The algorithm to carry out this phase is shown in Figure 1. Although the illustrated embodiment mentions 'city map', the method can be used for any geographical area from smaller sizes (neighbourhoods) to larger units like states or countries, as long as the necessary maps are available. Next the different steps of Figure 1 diagram are described:

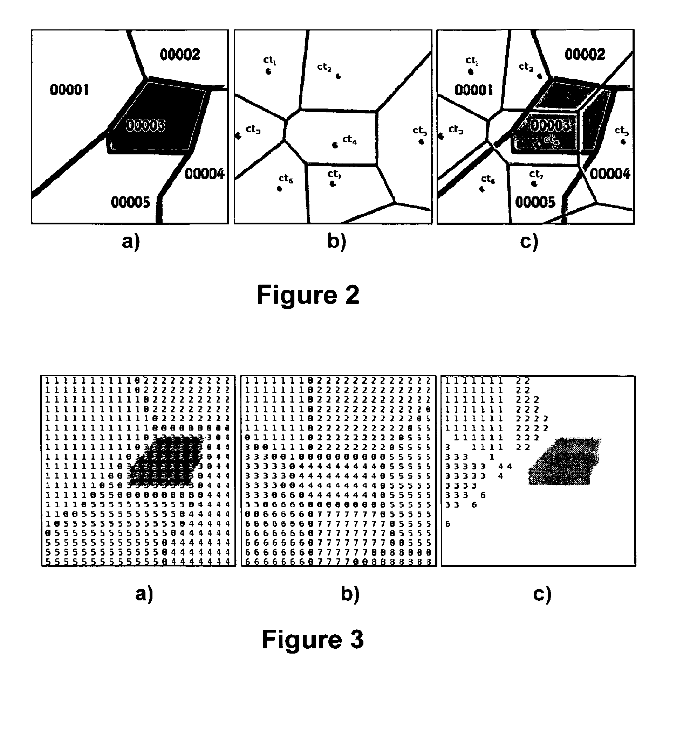

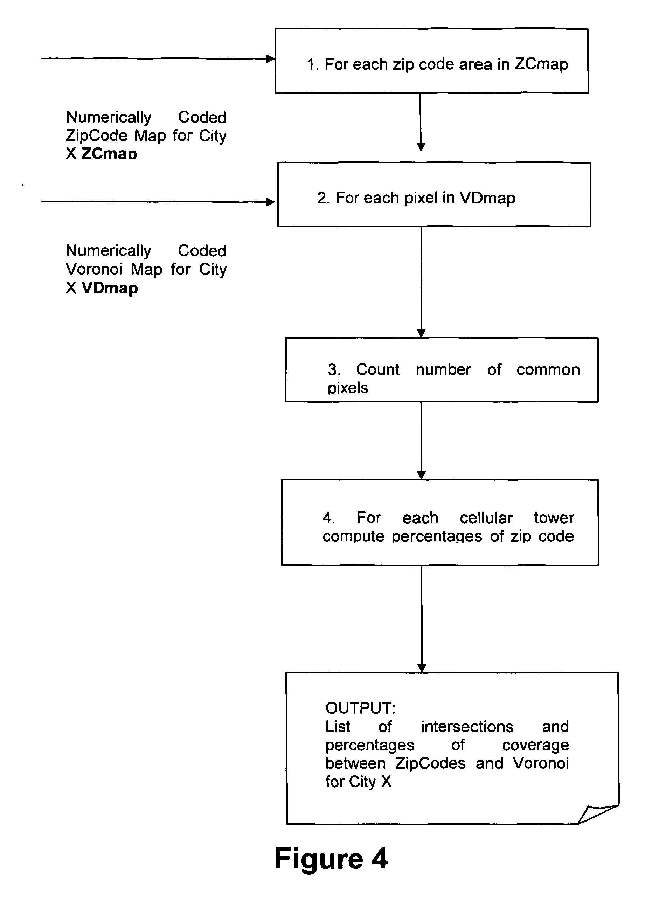

(1A) Cell Tower Locations. These locations are obtained through a database CT which contains the geo-location (latitude, longitude) of the cellular towers in different geographical areas.
(1B) Zip Code Maps. These maps are obtained from a database ZC which contains zip code maps for different geographical areas (zip code maps are maps representing the geographical coverage of each code. See [6]).
(1 C) This step comprises retrieving the zip code map for a city X under study.
(2) For a city X, at this step, the geo-location of all of its cellular towers is retrieved from database CT, and its Voronoi diagram is computed (see Figure 2(a) and 2(b)).
(3A) The method associates, at this step, to each zip code area in the zip code map a numeric representation. For that purpose, each pixel within the same zip code area is represented as the same number (see Figure 3a).
(3B) The method associates to each Voronoi polygon in the Voronoi map a numeric representation. For that purpose, each pixel within the same Voronoi polygon is represented with the same number (see Figure 3b).
(4) For a city X, and using the numerical representations of its zip code map and its Voronoi map, a scanline algorithm is applied to compute the intersections between each Voronoi polygon and each zip code area (see Figure 2c, further details are explained below and in Figure 4).
(5) This step comprises, for each of the clients in the client database (i.e. in the indicated as "CDRs of clients with a contract"), adding next to the zip code that represents the residential location of the user, the percentages of zip code area covered by each cellular tower, and the cellular towers that cover that area.

The scanline algorithm is represented in detail in Figure 4 and computes, for each zip code, the Voronoi areas included within the zip code's geographical limits and the corresponding coverage percentages. The method comprises seeking to associate each zip code with the cellular towers (BTSs) whose Voronoi diagrams are partially (or totally) included in the geographical area enclosed by the zip code. With this approach, each zip code $zc_i$ can be represented as $zc_i = p*cta+m*ctb+...+r*ctd$ where p, m, ...r represent the percentages of the cellular towers Voronoi diagrams cta, ctb,..., ctd that are covered by a certain zip code $zc_i$. The final output will associate a list of cellular towers to each zip code i.e., $zc_i = \{cta, ctb, ...,ctd\}$.
For example, as can be seen in Figure 3c, zip code 0003 could be represented as the list of cellular towers that cover its geographical area i.e., $zc0003 = 0.5ct4 + 0.3ct2 + 0.2ct5$. Thus, according to the indicated formalism, a user with a zip code 0003 associated to its residential location, will now have it labelled as {ct2, ct4, ct5}. The scan line algorithm consists of the following steps (see Figure 4):

*(1)* Process inputted numerically coded zip code areas of the zip code map for city X, and for each zip code area within the numerical representation of the zip code map go to box (2).

*(2)* Process inputted numerically coded Voronoi map for city X, and for each pixel within the numerical representation of the Voronoi diagram map go to box (3).

(3) Compute the number of pixels from each Voronoi polygon that lay within each zip code area in the map.

(4) Associate to each zip code the percentages of areas covered by each cell or cellular tower. The final codification is represented as:

$$zc_i \text{ as } zc_i = p*\overline{ct_a} + m*\overline{\overline{ct_b}} + \ldots + r*ct_d$$

Where p, m and r are the percentage of the voronoi polygons (of different cellular towers) covered by *zip code i*. This formula is a representation of the cellular towers that correspond to a specific users' residential location.

II. Identification of the Calling Pattern For the Training Set

The residential location problem has been formalized, in the method of the invention, as a classification problem that assigns to each user a BTS representing her/his residential location. The identification of the calling pattern that assigns users to residential BTSs is formalized as an optimization problem where a Genetic Algorithm (GA) focuses on finding the combination of days of the week and times of the day that best characterize the residential calling pattern using the training set.

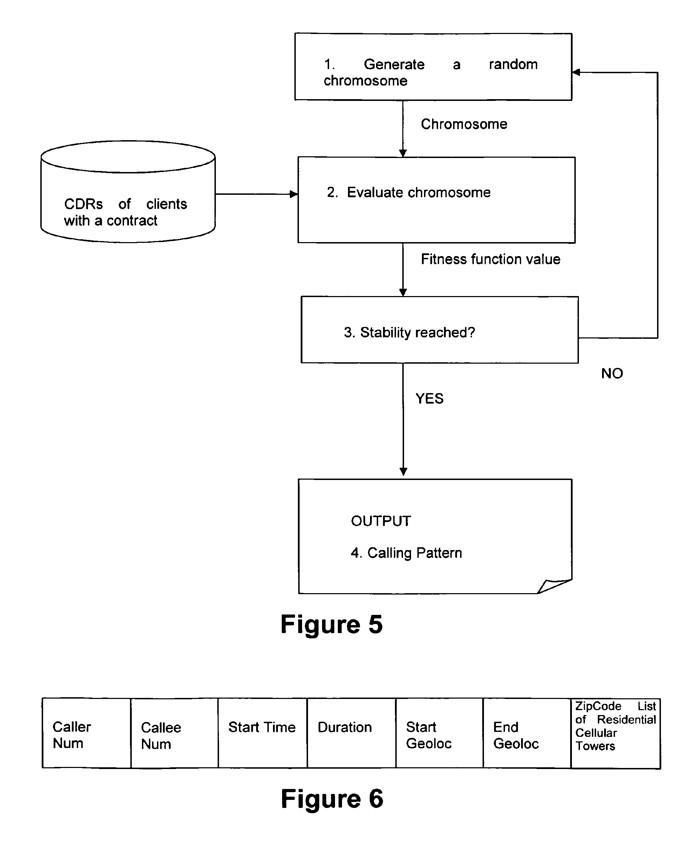

The training set consists of the users for whom both their residential location (zip code) and cellular phone calls (CDRs) are known. The residential location of the users in the training set is transformed from zip codes to lists of cellular towers using the scan line algorithm described previously (see Figure 6 for the CDR structure). The optimization problem is solved using genetic algorithms.

Once the calling pattern that best computes the residential location from CDRs is obtained by the method hereby presented, it can be used to determine the residential location of subscribers for whom this piece of information is unknown (see Section III).

Figure 5 shows the steps taken by the method to identify the calling pattern that best characterizes the training set (clients with a contract):

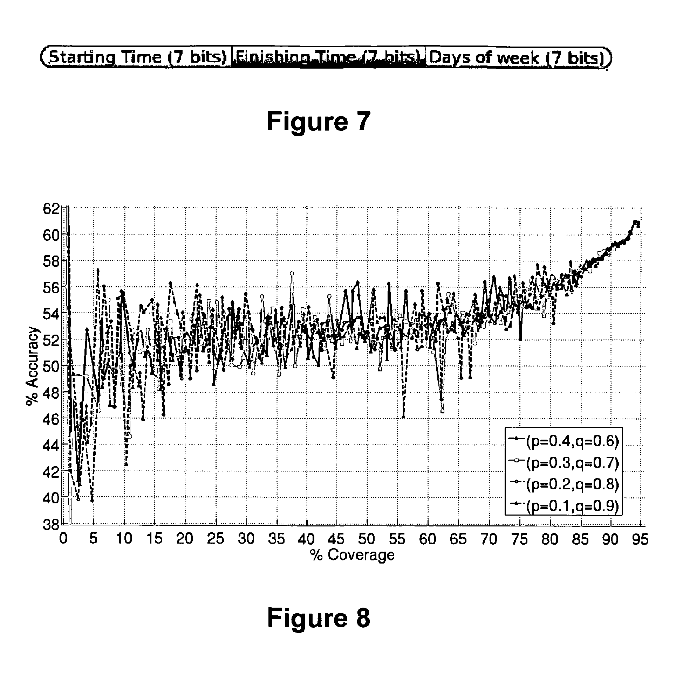

(1) The Genetic algorithm generates one or more random chromosomes (candidate solution). See Figure 7 for a sample of the chromosome structure.

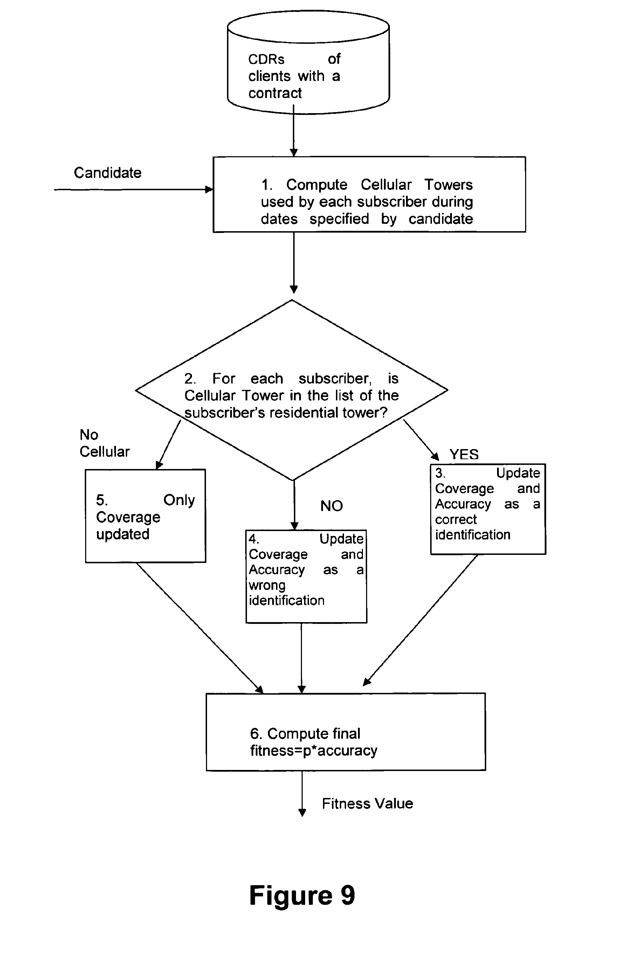

(2) The chromosome is evaluated by a fitness function that computes the number of users for whom the residential location is correctly computed using the chromosome under evaluation. The evaluation of the chromosomes is done using the call detail records of each subscriber. See Figure 6 for a sample of the records retrieved from the DB. For details on evaluation see Figure 9 and section II.C.

(3) The method keeps evaluating randomly generated chromosomes until stability is reached. Stability is reached when the solution reaches a quality bar initially set up by the user of this method. The quality bar measures the difference between consecutive fitness functions. When that difference is smaller than the value set by the user, the execution stops.

(4) Upon stability, the optimal solution found by the genetic algorithm contains the values that best characterize the residential calling pattern, i.e. the method of the invention comprises establishing the values contained by the chromosome for which stability has been reached as those belonging to said optimal residential calling pattern, said values including time period under which users make cell phone calls from their residential location and the days of the week when users typically make cell phone calls from their residential location.

To fully understand the execution of the genetic algorithm (GA) next the chromosomes, the fitness function used by the GA and the evaluation process are described.

II.A Description of the Chromosomes

As shown in Figure 7, the chromosome defined for an embodiment of the method of the invention is composed of three different genes. The first two genes represent the starting time and the finishing time i.e., range that defines the time period under which users make cellular phone calls from their residential location. Each time variable is composed of seven bits, which divides the day in fractions of 11.25 minutes each. Finally, the third gene represents the days of the week when users typically make cellular phone calls from their residential location. Each bit of this field represents one day of the week e.g., 1000000 is Sunday, 0100000 is Monday, and 1000001 comprises Saturday and Sunday.

II.B Description and Self-Calibration of the Fitness Function

In order to evaluate the overall quality of each chromosome, a fitness function is defined using the coverage and the accuracy of the residential calling pattern described by the candidate solution.

Accuracy is defined as the percentage of users for whom the calling pattern correctly assigns as residential location one of the cellular towers in the user's cellular towers list associated to its zip code.

Coverage is defined as the percentage of users from the training set that have been assigned a cellular tower (correct or incorrect) as residential location.

Finally, the fitness function is defined as *fitness = p \*coverage + q \*accuracy* where the values of p and q are weights assigned to each of the two measures depending on the significance we want to give to the accuracy or the coverage of the algorithm. The optimal values for these weights are computed by testing the performance of the Genetic Algorithm across different ranges.

The method of the invention is fully automatic and the algorithm implementing the method decides itself which are the best values of p and q according to the requirements of accuracy and coverage initially set up by the user of the method. Figure 8 shows how the fitness function evolves for different values of p and q. The specific values for p and q at each run are automatically selected by the method; this is part of its self-calibration.

III.C Evaluation

Each individual (candidate solution, i.e. random chromosome) is evaluated as follows (see Figure 9):

1. Compute, for each user with a contract, the list of cellular towers that comply with the requirements established by the values of the genes of the chromosome. If more than one cellular tower complies with the requirements of the candidate solution, the cellular tower with the highest weekly average of number of calls is selected.

For example, if an individual has the values (22 : 11 : 00, 07 : 33 : 00, 1000001), it is computed, for each user, the cellular tower that handled calls on Saturdays and Sundays during the time range 22 : 11 : 00 - 07 : 33 : 00.

2. For each user, check whether the resulting cellular tower is in the list of cellular towers associated to the user.

3. If it is in the list, the residential location classification is considered correct, and the coverage and accuracy updated with one correct answer.

4. If it is not in the list, the answer is considered incorrect and the accuracy and coverage are updated appropriately.

5. If no cellular tower was used during the time period specified by the candidate solution, it is considered that there is no answer, and the coverage is updated but the accuracy is not.

6. Compute the final fitness function and provide value

III. How to Use the Calling Pattern for the Testing Set

Once a residential calling pattern has been identified as the optimal representation for the training set, said pattern is used to identify the home location of the subscribers whose residential geographical coordinates are unknown (users in the testing set), i.e to perform step b) of the method of the invention.

The process is simply and consists of running step 1 in Figure 9, given the candidate solution computed, and considered as optimal, and the database with the CDRs from all the users whose residential location is unknown.

In fact, by simply computing the BTS (cellular towers) with the highest number of cellular phone calls during the days of the week and times of the day determined by the chromosome, it can be determined the BTS that is closest to each subscribers' residential location.

Advantages of the Invention:

The method of the invention represents a first effort towards automatically identifying the residential location of subscribers solely based on its cellular phone records. The main advantage of this method, and of the algorithm implementing there to, is that it computes residential location automatically, as opposed to previous approaches that computed it through manually pre-defined rules. Additionally, it eliminates the need to tweak the manual rules for each region, since the computation can be executed automatically for any region or country.

A person skilled in the art could introduce changes and modifications in the embodiments described without departing from the scope of the invention as it is defined in the attached claims.

ACRONYMS AND ABBREVIATIONS

CDR Call Detail Records

Cellular phone Call Data Records (CDRs) are collected from a telecom carrier. Each CDR contains the encrypted cellular phone numbers of caller and callee, the date and time of the call, the duration of the call and the initial and final location of the caller while making the call. The caller location is approximated by the geographical position of the cellular tower that handled the call.

REFERENCES

[1] M. Bayir, M. Demirbas and N.Eagle, " Discovering SpatioTemporal Mobility Profiles of Cellphone Users", WoWMoM 2009.

[2] S. Krygsman and Schmidtz, "The use of cellular phone technology in activity and travel data collection", 24th Annual Southern African Transport Conference 2005

[3] M. Gonzalez, C. Hidalgo and A-L. Barabasi, "Understanding Individual Human Mobility Patterns", Nature, Volume 453, June 2008.

[4] H. Holland, "Adaptation in Natural and Artificial System", The University Michigan Press, 1975.

[5] M. I. Shamos and D. Hoey, "Closest Point Problems", In Proceedings 16th Annual IEEE Symposium on Foundation of Computer Science, 1975.

[6] Zip Code Maps, http://maps.huge.info/zip.htm

**Claims**

**1.** A method for residential localization of mobile phone users, comprising defining the residential location of at least one user according to the user's mobile phone activity during a time pattern comprising at least one specific period of time and determining said time pattern, or residential calling pattern, from mobile phone-call data of a plurality of users whose residential locations are known a priori **characterised in that** in order to determine the residential location of users with unknown residence it comprises automatically carrying out following steps:

a) associating, for each of said plurality of users with unknown residence, a known geographical area identification, determining a behavioural fingerprint of each of said plurality of users with unknown residence from their cellular phone usage and assigning, from said determined behavioural fingerprint, a cellular tower that represents her/his geographical area identification;
b) optimizing a data of a training set including data referring to each of said plurality of users whose residential locations are known a priori in order to find an optimal residential calling pattern, using at least one genetic algorithm to perform said optimization;
c) using said genetic algorithm to generate at least one random chromosome, representative of a candidate solution or candidate residential calling pattern, and evaluating said at least one chromosome by a fitness function that computes the number of users for whom the residential location is correctly located using the chromosome under evaluation, and
d) determining a residential location of said at least one user whose residential location is unknown, by applying said optimal residential calling pattern and said candidate residential calling pattern to mobile phone-call data within said at least one specific period included in said residential calling pattern within said geographical area identification; and obtaining the cellular tower or cellular towers indicated by said data as having been used to make said at least one call.

**2.** A method as per claim 1, comprising obtaining said mobile phone-call data from call detail records of the mobile phones of said users.

**3.** A method as per claim 1, wherein said known geographical area identification is a zip code.

**4.** A method as per claim 3, wherein said data of a training set including data referring to each of said plurality of users regards at least its identification, its mobile phone calls and said cellular tower assigned, in order to find an optimal residential calling pattern that maximizes the percentage of users for whom the cellular tower assigned as residential location is correct.

**5.** A method as per any of the previous claims, wherein said residential calling pattern includes a combination of days of the week and times of the day at which calls are made by users at their respective residential locations.

**6.** A method as per claim 3, wherein said known geographical area identification in said step a) comprises carrying out said association between zip codes and cellular towers by mapping the geographical correspondence there between.

**7.** A method as per claim 6, wherein in order to perform said mapping, the method comprises:

- approximating the coverage of the cellular towers within each geographical area by a Voronoi Diagram, and associating to each Voronoi polygon a numeric representation, wherein each pixel within the same Voronoi polygon is represented with the same number; and
- associating to each zip code area in the zip code map a numeric representation, wherein each pixel within the same zip code area is represented as the same number.

**8.** A method as per claim 7, comprising applying to said numeric representations a scanline algorithm to compute the intersections between each Voronoi polygon and each zip code area.

**9.** A method as per claim 8, comprising, for each of said plurality of users, adding in a database, next to the zip code that represents the residential location of each user, the percentages of zip code area covered by each cellular tower, and the cellular towers that cover that area.

**10.** A method as per claim 9, comprising representing each zip code as $zc_i = p*cta+m*ctb+...+r*ctd$ where p, m, ...r represent the percentages of the cellular towers Voronoi diagrams cta, ctb,..., ctd that are covered by a certain zip code $zc_i$.

**11.** A method as per claim 1, wherein the evaluation of said at least one chromosome is done using the call detail records of each of said plurality of users.

**12.** A method as per claim 11, comprising randomly generating chromosomes and evaluating them until stability of said fitness function is reached.

**13.** A method as per claim 12, comprising initially setting up a quality bar by a user, and establishing that stability is reached when the solution reaches said quality bar.

**14.** A method as per claim 13, comprising establishing the values contained by the chromosome for which stability has been reached as those belonging to said optimal residential calling pattern, said values including time period under which users make cellular phone calls from their residential location and the days of the week when users typically make cellular phone calls from their residential location.

**15.** A method as per claim 14, comprising defining said fitness function using the coverage and the accuracy of the candidate residential calling pattern described by each chromosome, the requirements of accuracy and coverage being initially set up by a user of the method.

**Patentansprüche**

**1.** Verfahren zur Wohnortlokalisierung von Mobiltelefonnutzern, umfassend das Definieren des Wohnorts von zumindest einem Nutzer je nach der Mobiltelefonaktivität des Nutzers während eines Zeitmusters, das zumindest einen bestimmten Zeitraum umfasst, und das Bestimmen des genannten Zeitmusters oder Wohnortanrufmusters anhand von Mobiltelefonanrufdaten einer Vielzahl an Nutzern, deren Wohnorte von vorne herein bekannt sind, **dadurch**

**gekennzeichnet, dass** es zum Bestimmen des Wohnorts von Nutzern mit einem unbekannten Wohnsitz das automatische Ausführen der folgenden Schritte umfasst:

a) Zuordnen für jeden der genannten Vielzahl an Nutzern mit unbekanntem Wohnsitz einer bekannten Kennung eines geografischen Gebiets, unter Bestimmung eines Verhaltensfingerabdrucks jedes der Vielzahl der genannten Nutzer mit unbekanntem Wohnsitz anhand ihrer Mobiltelefonnutzung und das Zuordnen anhand des genannten bestimmten Verhaltensfingerabdrucks eines Mobilfunkmasts, welcher seine/ihre Kennung eines geografischen Gebiets darstellt;

b) Optimieren von Daten eines Übungssatzes, welcher Daten bezüglich jedes der genannten Vielzahl an Nutzern, deren Wohnorte von vorne herein bekannt sind, beinhaltet, um ein optimales Wohnortanrufmuster zu finden, wobei zumindest ein genetischer Algorithmus verwendet wird, um die genannte Optimierung auszuführen;

c) Verwenden des genannten genetischen Algorithmus zur Erzeugung von zumindest einem zufälligen Chromosom, welches stellvertretend für eine Kandidatenlösung oder ein Kandidatenwohnortanrufmuster steht, und Auswerten des genannten zumindest einen Chromosoms durch eine Fitnessfunktion, welche die Anzahl an Nutzern, für welche der Wohnort korrekt ermittelt ist, unter Verwendung des ausgewerteten Chromosoms berechnet, und

d) Bestimmen eines Wohnorts des genannten zumindest einen Nutzers, dessen Wohnort unbekannt ist, durch Anwendung des genannten optimalen Wohnortanrufmusters und des genannten Kandidatenwohnortanrufmusters auf Mobiltelefonanrufdaten innerhalb des genannten zumindest einen bestimmten Zeitraums, welcher in dem genannten Wohnortanrufmuster innerhalb der genannten Kennzeichnung eines geografischen Gebiets enthalten ist; und Abrufen des Mobilfunkmasts oder der Mobilfunkmäste, welche von den genannten Daten als verwendet angegeben sind, um den genannten zumindest einen Anruf zu tätigen.

2. Verfahren nach Anspruch 1, umfassend das Abrufen der genannten Mobiltelefonanrufdaten anhand von Einzelverbindungsnachweisen der Mobiltelefone der genannten Nutzer.

3. Verfahren nach Anspruch 1, wobei die genannte bekannte Kennzeichnung eines geografischen Gebiets eine Postleitzahl ist.

4. Verfahren nach Anspruch 3, wobei die genannten Daten eines Übungssatzes, welcher Daten bezüglich jedes der genannten Vielzahl an Nutzern beinhaltet, zumindest deren Kennzeichnung, deren Mobiltelefonanrufe und den genannten zugeordneten Mobilfunkmast betreffen, um ein optimales Wohnortanrufmuster zu finden, welches den prozentualen Anteil an Nutzern, für welche der als Wohnort zugeordnete Mobilfunkmast korrekt ist, maximiert.

5. Verfahren nach einem der vorherigen Ansprüche, wobei das genannte Wohnortanrufmuster eine Kombination von Wochentagen und Tageszeiten, an bzw. zu welchen Anrufe von Nutzern an deren jeweiligen Wohnorten getätigt werden, beinhaltet.

6. Verfahren nach Anspruch 3, wobei die genannte bekannte Kennzeichnung eines geografischen Gebiets im genannten Schritt a) das Ausführen der genannten Zuordnung zwischen Postleitzahlen und Mobilfunkmästen durch ein Mapping der geografischen Übereinstimmung unter ihnen umfasst.

7. Verfahren nach Anspruch 6, wobei das Verfahren zur Durchführung des genannten Mappings Folgendes umfasst:

- Annähern der Abdeckung der Mobilfunkmäste innerhalb jedes geografischen Gebiets durch ein Voronoi-Diagramm, und Zuordnen einer numerischen Darstellung zu jedem Voronoi-Polygon, wobei jedes Pixel innerhalb desselben Voronoi-Polygons mit derselben Zahl dargestellt ist; und
- Zuordnen einer numerischen Darstellung zu jedem Postleitzahlgebiet in der Postleitzahlkarte, wobei jedes Pixel innerhalb desselben Postleitzahlgebiets als dieselbe Zahl dargestellt ist.

8. Verfahren nach Anspruch 7, umfassend das Anwenden eines Scanline-Algorithmus auf die genannten numerischen Darstellungen zur Berechnung der Schnittpunkte zwischen jedem Voronoi-Polygon und jedem Postleitzahlgebiet.

9. Verfahren nach Anspruch 8, umfassend für jeden der genannten Vielzahl an Nutzern das Hinzufügen in einer Datenbank neben der Postleitzahl, welche den Wohnort eines jeden Nutzers darstellt, der prozentualen Anteile des Postleitzahlgebiets, welches durch jeden Mobilfunkmast abgedeckt ist, und der Mobilfunkmäste, welche das Gebiet abdecken.

**10.** Verfahren nach Anspruch 9, umfassend das Darstellen jeder Postleitzahl als $zci = p*cta+m*ctb+...r*ctd$, wobei p, m, ...r die prozentualen Anteile der Voronoi-Diagramme der Mobilfunkmasten cta, ctb, ..., ctd darstellen, welche durch eine bestimmte Postleitzahl zci abgedeckt sind.

**11.** Verfahren nach Anspruch 1, wobei die Auswertung des genannten zumindest eines Chromosoms unter Verwendung der Einzelverbindungsnachweise jedes der genannten Vielzahl an Nutzern erfolgt.

**12.** Verfahren nach Anspruch 11, umfassend das zufällige Erzeugen von Chromosomen und die Auswertung derselbigen, bis eine Stabilität der genannten Fitnessfunktion erreicht ist.

**13.** Verfahren nach Anspruch 12, umfassend das anfängliche Erstellen eines Qualitätsniveaus durch einen Nutzer, und das Festlegen, dass eine Stabilität erreicht ist, wenn die Lösung das genannte Qualitätsniveau erreicht.

**14.** Verfahren nach Anspruch 13, umfassend das Festlegen der Werte, welche in dem Chromosom enthalten sind, für welches eine Stabilität erreicht wurde, als jene Werte, die zu dem genannten optimalen Wohnortanrufmuster gehören, wobei die genannten Werte einen Zeitraum, in welchem Nutzer Anrufe von einem Mobiltelefon von ihrem Wohnort aus tätigen, und die Wochentage, an denen Nutzer normalerweise Anrufe von einem Mobiltelefon von ihrem Wohnort aus tätigen, beinhalten.

**15.** Verfahren nach Anspruch 14, umfassend das Definieren der genannten Fitnessfunktion unter Verwendung der Abdeckung und der Genauigkeit des durch jedes Chromosom definierten Kandidatenwohnortanrufmusters, wobei die Anforderungen hinsichtlich der Genauigkeit und der Abdeckung zu Beginn durch einen Nutzer des Verfahrens erstellt werden.

## Revendications

**1.** Un procédé de localisation résidentielle d'utilisateurs de téléphone mobile, comprenant la définition du lieu de résidence d'au moins un utilisateur en fonction de l'activité du téléphone mobile de l'utilisateur durant un profil temporel comprenant au moins une période de temps spécifique et la détermination dudit profil temporel, ou profil d'appel résidentiel, à partir de données d'appels téléphoniques mobiles d'une pluralité d'utilisateurs dont les lieux de résidence sont *à priori* connus, **caractérisé en ce que** afin de déterminer le lieu de résidence des utilisateurs avec une résidence inconnue il comprend l'exécution automatique des étapes suivantes :

a) association, pour chacun de ladite pluralité d'utilisateurs avec une résidence inconnue, d'une identification d'une zone géographique connue, en déterminant une empreinte comportementale de chacun de ladite pluralité d'utilisateurs avec une résidence inconnue à partir de l'utilisation de leur téléphone mobile et en affectant, à partir de ladite empreinte comportementale déterminée, une tour de téléphonie mobile qui représente l'identification de sa zone géographique ;
c) optimisation d'un ensemble de données d'entrainement en incluant les données portant sur chacun de ladite pluralité d'utilisateurs dont les lieux de résidence sont *à priori* connus afin de trouver un profil d'appel résidentiel optimal, en utilisant au moins un algorithme génétique pour accomplir ladite optimisation ;
c) utilisation dudit algorithme génétique pour générer au moins un chromosome aléatoire, représentatif d'une solution candidate ou d'un profil d'appel résidentiel candidat, et évaluation dudit au moins un chromosome par le biais d'une fonction de pertinence qui calcule le nombre d'utilisateurs pour qui le lieu de résidence est correctement localisé en utilisant le chromosome en évaluation, et
d) détermination d'un lieu de résidence dudit au moins un utilisateur dont le lieu de résidence est inconnu, en appliquant ledit profil d'appel résidentiel optimal et ledit profil d'appel résidentiel candidat aux données d'appel téléphonique mobile dans au moins une période spécifique inclue dans ledit profil d'appel résidentiel dans ladite identification de la zone géographique ; et obtention de la tour de téléphonie mobile ou des tours de téléphonie mobile indiquées par lesdites données puisqu'elles ont été utilisées pour effectuer ledit au moins un appel.

**2.** Un procédé selon la revendication 1, comprenant l'obtention desdites données d'appel téléphonique mobile à partir des relevés détaillés des appels téléphoniques mobiles desdits utilisateurs.

**3.** Un procédé selon la revendication 1, dans lequel ladite identification de la zone géographique connue est un code postal.

**4.** Un procédé selon la revendication 3, dans lequel l'ensemble de données d'entrainement en incluant les données portant sur chacun de ladite pluralité d'utilisateurs prend en considération au moins son identification, ses appels téléphoniques mobiles et ladite tour de téléphonie mobile affectée, afin de trouver un profil d'appel résidentiel optimal qui maximise le pourcentage d'utilisateurs pour qui la tour de téléphonie mobile affectée comme lieu de résidence est correcte.

**5.** Un procédé selon l'une quelconque des revendications précédentes, dans lequel ledit profil d'appel résidentiel inclut une combinaison de jours de la semaine et d'heures de la journée où les appels sont effectués par des utilisateurs dans leurs lieux de résidence respectifs.

**6.** Un procédé selon la revendication 3, dans lequel ladite identification de la zone géographique connue dans ladite étape a) comprend l'exécution de ladite association entre les codes postaux et les tours de téléphonie mobile en cartographiant la correspondance géographique entre eux.

**7.** Un procédé selon la revendication 6, dans lequel afin d'accomplir ladite cartographie, le procédé comprend :

- calcul approximatif de la couverture des tours de téléphonie mobile dans chaque zone géographique par un Diagramme Voronoï, et association d'une représentation numérique à chaque polygone de Voronoï, dans laquelle chaque pixel dans le même polygone de Voronoï est représenté avec le même numéro ; et
- l'association d'une représentation numérique à chaque zone de code postal dans la carte des codes postaux, dans laquelle chaque pixel dans la même zone de code postal est représenté avec le même numéro.

**8.** Un procédé selon la revendication 7, comprenant l'application sur lesdites représentations numériques d'un algorithme scanline pour calculer les intersections entre chaque polygone de Voronoï et chaque zone de code postal.

**9.** Un procédé selon la revendication 8, comprenant, pour chacun de ladite pluralité d'utilisateurs, l'entrée dans une base de données, à côté du code postal représentant le lieu résidentiel de chaque utilisateur, des pourcentages de la zone de code postal couverte par chaque tour de téléphonie mobile, et les tours de téléphonie mobile qui couvrent cette zone.

**10.** Un procédé selon la revendication 9, comprenant la représentation de chaque code postal étant donné que $zc_i =$ $p*cta+m*ctb+...+*ctd$ où $p, m, ...r$ représentent les pourcentages des diagrammes de Voronoï des tours de téléphonie mobile cta, ctb, ..., ctd qui sont couvertes par un certain $zc_i$ de code postal.

**11.** Un procédé selon la revendication 1, dans lequel l'évaluation dudit au moins un chromosome est réalisée en utilisant les relevés détaillés des appels de chacun de ladite pluralité d'utilisateurs.

**12.** Un procédé selon la revendication 11, comprenant la génération aléatoire de chromosomes et leur évaluation jusqu'à ce que la stabilité de ladite fonction de pertinence soit obtenue.

**13.** Un procédé selon la revendication 12, comprenant l'installation initiale d'un niveau de qualité par un utilisateur, et l'estimation que cette stabilité est atteinte lorsque la solution atteint ledit niveau de qualité.

**14.** Un procédé selon la revendication 13, comprenant l'estimation des valeurs contenues par le chromosome pour lequel la stabilité a été obtenue comme celles appartenant audit profil d'appel résidentiel optimal, lesdites valeurs incluant la période de temps dans laquelle les utilisateurs effectuent des appels téléphoniques mobiles depuis leur lieu de résidence et les jours de la semaine lorsque les utilisateurs effectuent généralement des appels téléphoniques mobiles depuis leur lieu de résidence.

**15.** Un procédé selon la revendication 14, comprenant la définition de ladite fonction de pertinence en utilisant la couverture et la précision du profil d'appel résidentiel candidat décrit par chaque chromosome, les critères de précision et de couverture étant initialement établis par un utilisateur du procédé.

1A. Cellular Tower

1B. Zip Code

1C. ZipCode Map for City X

2. Compute Voronoi

Voronoi Map for City

3A. Compute Numerical Representation of the Voronoi Map for

3B. Compute Numerical Representation of the ZipCode Map for

Numerically Coded Voronoi Map for City X

Numerically Coded ZipCode Map for City X

4. Scan Line Algorithm

Map with ZipCodes/Voronoi intersections for City X

CDRs of clients with a contract

5. Associate to each client in ClientDB, the list of cellular towers covered by its zipcode

**Figure 1**

**Figure 2**

**Figure 3**

Numerically Coded
ZipCode Map for City
X **ZCmap**

Numerically Coded
Voronoi Map for City
X **VDmap**

1. For each zip code area in ZCmap

2. For each pixel in VDmap

3. Count number of common pixels

4. For each cellular tower compute percentages of zip code

OUTPUT:
List of intersections and percentages of coverage between ZipCodes and Voronoi for City X

# Figure 4

**Figure 5**

| Caller Num | Callee Num | Start Time | Duration | Start Geoloc | End Geoloc | ZipCode List of Residential Cellular Towers |
|---|---|---|---|---|---|---|
| | | | | | | |

**Figure 6**

Starting Time (7 bits) Finishing Time (7 bits) Days of week (7 bits)

## Figure 7

## Figure 8

CDRs of clients with a contract

Candidate → 1. Compute Cellular Towers used by each subscriber during dates specified by candidate

2. For each subscriber, is Cellular Tower in the list of the subscriber's residential tower?

No Cellular

5. Only Coverage updated

NO

4. Update Coverage and Accuracy as a wrong identification

YES

3. Update Coverage and Accuracy as a correct identification

6. Compute final fitness=p*accuracy

Fitness Value

# Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. BAYIR ; M. DEMIRBAS ; N.EAGLE.** Discovering SpatioTemporal Mobility Profiles of Cellphone Users. *WoWMoM,* 2009
- **S. KRYGSMAN ; SCHMIDTZ.** The use of cellular phone technology in activity and travel data collection. *24th Annual Southern African Transport Conference,* 2005
- **M. GONZALEZ ; C. HIDALGO ; A-L. BARABASI.** Understanding Individual Human Mobility Patterns. *Nature,* June 2008, vol. 453
- **H. HOLLAND.** Adaptation in Natural and Artificial System. The University Michigan Press, 1975
- **M. I. SHAMOS ; D. HOEY.** Closest Point Problems. *Proceedings 16th Annual IEEE Symposium on Foundation of Computer Science,* 1975
- *Zip Code Maps, http://maps.huge.info/zip.htm*